# EUROPÄISCHE PATENTANMELDUNG

(11) **EP 1 580 470 A1**
(43) Veröffentlichungstag der Anmeldung: **28.09.2005**
(21) Anmeldenummer: 04006961.9
(22) Anmeldetag: 23.03.2004
(51) Int. Cl.: F16L 1/038, E03F 3/04, E21D 11/40, B29C 63/34

(54) **Verfahren und Vorrichtung zur Sanierung und Auskleidung von Kanälen, Becken, Gruben und dergleichen**

(71) Anmelder: Gleitbau-Gesellschaft mit beschränkter Haftung, 5020 Salzburg (AT)
(72) Erfinder: Kreiner, Alexander Dipl.-Ing., 5161 Elixhausen (AT); Lienbacher, Richard, 5440 Golling (AT)
(74) Vertreter: Heim, Hans-Karl

(57) **Zusammenfassung**

Die Erfindung betrifft ein Verfahren und eine Vorrichtung zur Sanierung und Auskleidung von Kanälen, Becken, Gruben und dergleichen im Bereich einer Sohle (5) und/oder Wänden (3,4) und insbesondere von nach oben offenen Betonkanälen.

Erfindungsgemäß wird mit Hilfe einer Gleit-Zieh-Schalung eine monolithische Sanierung bzw. Auskleidung durchgefürht und in einem Arbeitsgang ein Ausbesserungsmaterial (6), insbesondere Frischbeton, aufgebracht und anschließend ein Dichtmaterial (7), insbesondere eine flexible Betonschutzplatte, auf dem Ausbesserungsmaterial angeordnet und zu einem Schichtverbund (8) mit einer vergebbaren Oberfläche verbunden.

## Beschreibung

Die Erfindung betrifft ein Verfahren und eine Vorrichtung zur Sanierung und Auskleidung von Kanälen, Becken, Gruben und dergleichen gemäß dem Oberbegriff des Anspruchs 1.

Aus DE 201 14 872 U1 ist eine Schalungsvorrichtung zur Kanalsanierung bekannt, welche u.a. zum Einbringen eines Ausbesserungs- und Dichtmaterials an die Innenwandung von Abwasserkanälen ausgebildet ist. Als Ausbesserungs- und Dichtmaterial ist ein aushärtbarer Beton beschrieben. Die bekannte Schalung betrifft die Sanierung von Abwasserkanälen im Bereich von Zugängen von Hausanschlussleitungen, und das Ausbesserungs- und Dichtmaterial wird mit Hilfe eines Roboters an der auszubessernden Stelle angebracht.

Ein Nachteil der bekannten Schalung besteht darin, dass nur die Sanierung in einem begrenzten Bereich des Kanals, jedoch nicht über eine beträchtliche oder gesamte Länge kontinuierlich möglich ist. Es bedarf jeweils des An- und Abbaus der Schalung an den defekten Stellen, und eine Sanierung bzw. Auskleidung des gesamten Kanals, Beckens und dergleichen ist nicht möglich.

Der Erfindung liegt die **Aufgabe** zugrunde, ein Verfahren und eine Vorrichtung zur Sanierung und Auskleidung von Kanälen, insbesondere nach oben offenen Betonkanälen, zu schaffen, welche eine besonders schnelle und kostengünstige Sanierung bzw. Auskleidung mit der erforderlichen Dichtheit und langen Lebensdauer sowie mit einer den Erfordernissen anpaßbaren Oberfläche gewährleisten.

Verfahrensmäßig wird die Aufgabe durch die Merkmale des Anspruchs 1 und vorrichtungsmäßig durch die Merkmale des Anspruchs 10 gelöst.

Zweckmäßige und vorteilhafte Ausgestaltungen sind in den Unteransprüchen und in der Figurenbeschreibung enthalten.

Ein Grundgedanke des erfindungsgemäßen Verfahrens kann darin gesehen werden, mit Hilfe einer Vorrichtung, vorzugsweise einer Gleit-Zieh-Schalung, eine monolithische Sanierung und Auskleidung durchzuführen, und zunächst ein Ausbesserungsmaterial auf die Wandung des Kanals, worunter nachfolgend immer auch ein Becken oder eine Grube und dergleichen verstanden werden soll, aufzubringen und anschließend und in einem Arbeitsgang, auf das Ausbesserungsmaterial ein Dichtmaterial anzuordnen und zu einem Schichtverbund mit einer vorgebbaren Oberfläche und einem entsprechenden Reibungswiderstand zu verbinden.

Ein wesentlicher Grundgedanke der erfindungsgemäßen Vorrichtung besteht darin, eine Gleit-Zieh-Schalung vorzusehen, welche kontinuierlich in einem Kanal, zweckmäßigerweise in Längsrichtung, verfahren werden kann und im Bereich der Sohle und/oder der Wände des Kanals, gegebenenfalls auch über Kopf, jeweils eine Einrichtung aufweist, welche zum Aufbringen eines Ausbesserungsmaterials ausgebildet ist. Neben der Einrichtung zum Aufbringen des Ausbesserungsmaterials ist jeweils eine weitere Einrichtung zum Aufbringen eines Dichtmaterials vorgesehen, wobei auch diese Einrichtung, welche insbesondere zum Auflegen, Anpressen und Verankern des Dichtmaterials auf und in dem Ausbesserungsmaterial ausgebildet ist, im Bereich der Sohle und/oder der Wandung des Kanals angeordnet ist. Auf diese Weise ist eine monolithische Sanierung bzw. Auskleidung sowie eine Ausgleichung von geometrischen Imperfektionen im Bestand, das heißt von Schadstellen, Wellen, Löchern und dergleichen, möglich.

Es ist von Vorteil, dass als Ausbesserungsmaterial Frischbeton, beispielsweise Schüttbeton, Spritzbeton und Nassspritzbeton, verwendet werden kann. Frischbeton ist besonders für Betonkanäle geeignet und leicht zu verarbeiten und weist vorteilhafterweise eine relativ große Haftzugfestigkeit von Beton alt zu Beton neu auf. Die Haftzugfestigkeit liegt bei etwa 1,5 N/mm².

Von Vorteil ist Frischbeton als Ausbesserungsmaterial auch aufgrund einer einstellbaren Abbindezeit, welche beispielsweise zwischen 1 und 90 Minuten eingestellt werden kann.
Des Weiteren genügt zur Sanierung oder Ausbesserung der Betonwände und -sohle in der Regel eine relativ geringe Betonmenge. Vorteilhafterweise ist in der Regel eine Aufspritzdecke von etwa 4 bis 6 cm ausreichend.

Als Dichtmaterial, welches auf den beispielsweise mit Hilfe einer Rütteleinrichtung verdichteten und zweckmäßigerweise mit Hilfe einer Glätt- und Nivelliereinrichtung geglätteten Frischbeton aufgelegt wird, kann vorteilhaft ein flexibles, in Bahnen verlegbares Kunststoffmaterial verwendet werden. Ein derartiges Dichtmaterial dient gleichzeitig als Schutzplatte des Ausbesserungsmaterials und der Kanalwände und/oder -sohle und kann eine vorgebbare Oberfläche aufweisen.

Dieses als flexible Betonschutzplatte bezeichnete Dichtmaterial kann eine außerordentlich glatte bis strukturierte Oberfläche aufweisen und auch mit Ansätzen, z.B. zum Verwirbeln des Kanalwassers, versehen sein.

Eine derartige flexible Betonschutzplatte aus einem Kunststoff, insbesondere einem thermoplastischen Kunststoff wie chloriertes Polyethylen oder Polypropylen, kann vorteilhaft von Rollen, welche in einer entsprechenden Tragkonstruktion der Gleit-Zieh-Schalung oberhalb der zu sanierenden Wände und Sohle des Kanals gehalten werden, über entsprechend angeordnete Anpressrollen auf den geglätteten Frischbeton aufgelegt, an- bzw. eingepresst und verankert werden.

Eine besonders vorteilhafte Verbindung zwischen der flexiblen Betonschutzplatte und dem Frischbeton zwecks Ausbildung eines Schichtverbundes kann erreicht werden, wenn Ansätze, beispielsweise Verankerungselemente, an der Betonschutzplatte vorhanden sind, welche in den Frischbeton eingreifen.

Es hat sich gezeigt, dass etwa V-förmige Verankerungselemente, welche spalten- und reihenförmig oder versetzt an der Betonschutzplatte ausgebildet sind, zu einem besonders vorteilhaften Schichtverbund führen. Pro Quadratmeter können bis zu 420 Verankerungselemente, beispielsweise Verankerungsnoppen, ausgebildet sein. Zum eingesetzten Kunststoff und zur Herstellung der Betonschutzplatten wird auf die EP 0 436 058 B1 verwiesen.

Zweckmäßigerweise weist das Kunststoffmaterial für die flexible Betonschutzplatte eine relativ hohe Auszugsfestigkeit und Lebensdauer bei einer geringen Reibung auf. Vorteilhaft ist ein Kunststoffmaterial, mit einer Auszugs-festigkeit im Bereich 30 bis 45 t/m².

Für die erfindungsgemäße Sanierung oder Auskleidung eines Kanals ist es zweckmäßig, wenn die flexiblen Betonschutzplatten eine Breite aufweisen, welche nahezu der Breite der Kanalsohle bzw. der Kanalwände entspricht. Die in den Eckenkehlen zwischen den Wänden und der Sohle aneinandergrenzenden Betonschutzplatten können dann an ihren Längskanten miteinander verschweißt werden, um die erforderliche Dichtheit zu gewährleisten. Die Verbindung der Längskanten kann mit Hilfe von Extrudern und einem entsprechenden Kunststoffmaterial erfolgen.

Zweckmäßigerweise erfolgt vor der erfindungsgemäßen Sanierung oder Auskleidung eine Vorbereitung der Betonwände und -sohle. Insbesondere können größere Schäden ausgebessert und eine Reinigung, beispielsweise eine Hochdruckreinigung bei 300 bis 500 bar, durchgeführt werden.

Die erfindungsgemäße Gleit-Zieh-Schalung ist derart ausgebildet, dass die Wände und/oder die Sohle des Kanals kontinuierlich und bevorzugt gleichzeitig mit einem Ausbesserungsmaterial und nachfolgend mit einem Dichtmaterial versehen werden können und damit eine monolithische Sanierung außerordentlich effizient durchgeführt werden kann.

Es ist vorteilhaft, dass die Gleit-Zieh-Schalung wenigstens eine Tragkonstruktion aufweist, an welcher im Bereich der Kanalwände und/oder im Bereich der Kanalsohle jeweils eine Einrichtung zum Aufbringen des Ausbesserungsmaterials und nachfolgend jeweils eine Einrichtung zum Auflegen, Anpressen und Verankern eines Dichtmaterials angeordnet sind. Zum kontinuierlichen Verfahren der Gleit-Zieh-Schalung entlang des Kanals sind Laufrollen und ein gemeinsamer oder getrennte Antriebe vorgesehen, beispielsweise Zieh- oder Fahreinrichtungen.

In einer bevorzugten Ausbildung sind die Einrichtungen zum Aufbringen des Ausbesserungsmaterials, beispielsweise Spritzdüsen zum Aufbringen von Spritzbeton, frontseitig an der Tragkonstruktion befestigt. Den Spritzdüsen nachgeordnet ist jeweils eine Einrichtung zum Glätten und Nivellieren des aufgebrachten Frisch- bzw. Spritzbetons.

An der allen Einrichtungen zugehörigen gemeinsamen Tragkonstruktion oder den einzelnen Tragkonstruktionen für Sohle und Wandung sind des weiteren Halterungen für jeweils wenigstens eine Rolle der flexiblen Betonschutzplatte angeordnet, wobei in einer bevorzugten Konstruktion die Halterungen für die den zwei Seitenwänden zugeordneten Rollen parallel zueinander und die Halterung für die der Kanalsohle zugeordnete Rolle in Verfahrrichtung nach den Rollen der Seitenwände angeordnet sein kann.

Die von den Rollen abrollbaren Bahnen der flexiblen Betonschutzplatte werden mit Hilfe von jeweils wenigstens einer Anpressrolle auf den nivellierten Frischbeton gepresst. Wenigstens eine nachgeschaltete Schaltafel, welche über die gesamte Breite der Bahn reicht und über Stabilisierungsträger an der Tragkonstruktion befestigt ist, dient dem Einpressen der flexiblen Betonschutzplatte und der Herstellung des Schichtverbundes zwischen der flexiblen Betonschutzplatte und dem Frischbeton. Weitere Einzelheiten sind in der Figurenbeschreibung beschrieben.

Mit der erfindungsgemäßen Gleit-Zieh-Schalung wird eine außerordentlich schnelle und kostengünstige Sanierung oder Auskleidung von Kanälen, Gruben, Becken und dergleichen ermöglicht. Die Sohle und/oder Wände können in einem Arbeitsgang mit einem besonders geringen Material- und Arbeitszeitaufwand saniert, d.h. nachhaltig abgedichtet und mit einer glatten, einen geringen Reibungswiderstand aufweisenden Oberfläche oder mit einer strukturierten und/oder Verwirbelungselemente aufweisenden Oberfläche versehen werden. Weiterhin weisen die derart sanierten Bauwerke eine relativ lange Lebensdauer auf.

Die Erfindung wird nachstehend anhand einer Zeichnung weiter beschrieben. In dieser zeigen in einer stark schematisierten Darstellung
- Fig. 1: das Prinzip des erfindungsgemäßen Verfahrens und der erfindungsgemäßen Gleit-Zieh-Schalung;
- Fig. 2: eine Seitenansicht der erfindungsgemäßen Gleit-Zieh-Schalung im Bereich einer Kanalsohle;
- Fig. 3: einen Ausschnitt einer flexiblen Betonschutzplatte;
- Fig. 4: einen Längsschnitt durch einen nach dem erfinddungsgemäßen Verfahren hergestellten Schichtverbund;
- Fig. 5: eine Vorderansicht der erfindungsgemäßen Vorrichtung und
- Fig. 6: eine Draufsicht auf die erfindungsgemäße Vorrichtung, jedoch ohne Betonschutzplatten.

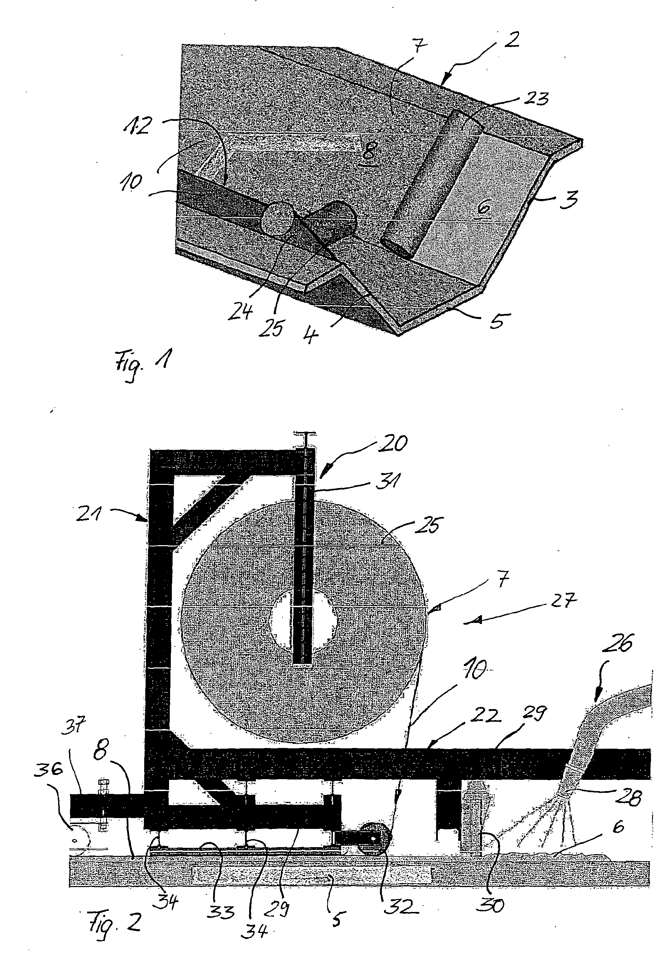

In Fig. 1 ist in einer ausschnittsweisen perspektivischen Darstellung ein Kanal 2 gezeigt, welcher als ein im Querschnitt nach oben offener, trapezförmiger Betonkanal mit einer Sohle 5 und zwei böschungsartig geneigten Wänden 3, 4 ausgebildet ist.

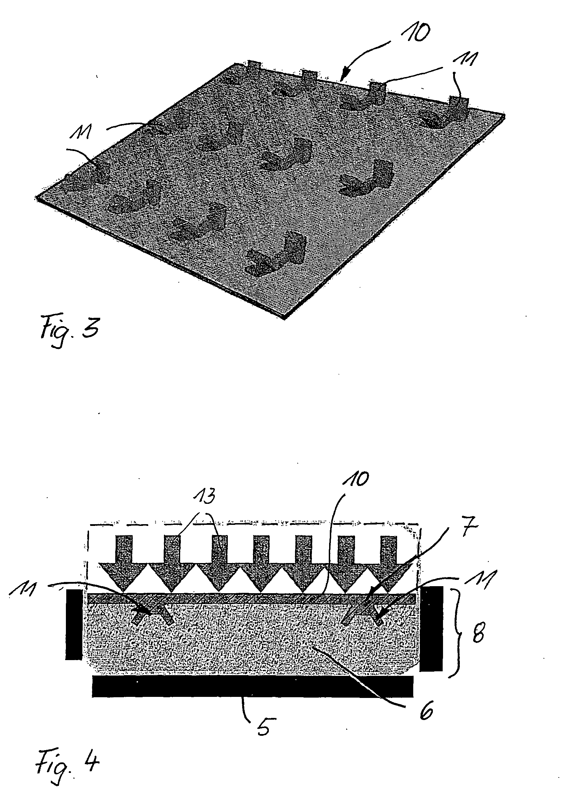

Zur Sanierung des Kanals 2 werden mit Hilfe einer Gleit-Zieh-Schalung 20, welche in Verbindung mit den Figuren 2, 5 und 6 erläutert wird, ein Ausbesserungsmaterial 6 und unmittelbar nachfolgend ein Dichtungsmaterial 7 aufgebracht und zu einem Schichtverbund 8 (Fig. 4) verbunden. In diesem Ausführungsbeispiel wird als Ausbesserungsmaterial 6 Spritzbeton auf die Oberfläche der Sohle 5 und die Seitenwände 3, 4 aufgebracht, wobei aus Fig. 1 nur die mit Spritzbeton beschichtete rechte Wand 3 hervorgeht.

Die Beschichtung der Sohle 5 erfolgt in diesem Beispiel nach der Beschichtung der Seitenwände 3, 4, was aus der Anordnung der Rolle 25 im Vergleich zu den Rollen 23, 24 im Bereich der Wände 3, 4 erkennbar ist.

Die Rollen 23, 24, 25 zeigen stark schematisiert das Aufbringen des Dichtungsmaterials 7, welches als flexible Betonschutzplatte 10 in Form von Bahnen mit einer korrespondierenden Breite zu den Wänden 3, 4 bzw. zur Sohle 5 aufgelegt, ein- bzw. angepresst und zu dem Schichtverbund 8 (Fig. 4) verbunden wird. Die Oberfläche des Schichtverbundes 8 und damit des sanierten Kanals 2 ist durch das verwendete Dichtmaterials 7 vorgegeben und außerordentlich glatt und weist deshalb einen geringen Reibungswiderstand auf. Die Dichtheit zwischen den Bahnen der flexiblen Betonschutzplatte 10 erfolgt durch Verschweißen an den aneinandergrenzenden Längsrändern 12.

Fig. 3 zeigt in einem Ausschnitt eine Bahn der flexiblen Betonschutzplatte 10, welche nur einseitig mit Ansätzen, nämlich mit Verankerungselementen 11, versehen ist. Auch aus Fig. 4 geht hervor, dass die Verankerungselemente 11 im Querschnitt etwa V-förmig an der auf dem Frischbeton 6 aufliegenden Seite ausgebildet sind, so dass sie unter Druck gemäß den Pfeilen 13 in Fig. 4 in den Frischbeton 6 eingepresst werden und einen Schichtverbund 8 bilden.

Fig. 2 zeigt stark schematisiert die erfindungsgemäße Gleit-Zieh-Schalungsvorrichtung 20 im Bereich der Kanalsohle 5. Die in einer Seitenansicht gezeigten Einrichtungen 26, 27 sind in prinzipiell gleicher Ausbildung im Bereich der beiden Kanalwände 4, 5 vorhanden und in diesem Beispiel an einer Tragkonstruktion 21 der Gleit-Zieh-Schalung 20 befestigt. Indem die Gleit-Zieh-Schalung 20 mittels entsprechend angeordneten Laufrollen 36 und einem nicht dargestellten Antrieb in dem Kanal 2 verfahren werden kann, erfolgt eine monolithische Sanierung des Kanals 2, d.h. kontinuierlich und gleichzeitig im Bereich der Seitenwände 3, 4 und der Sohle 5 und in einem Arbeitsgang.

Es ist auch möglich, getrennte Antriebe und Tragkonstruktionen für die Sohle und die Wandung vorzusehen, insbesondere, wenn es mehrerer Bahnen für die Sanierung relativ breiter Sohlen und/oder Wände bedarf.

Die Gleit-Zieh-Schalung 20 nach Fig. 2 weist für jede Wand 3, 4 und die Sohle 5 jeweils eine Einrichtung 26 zum Aufbringen eines Ausbesserungsmaterials 6 und eine Einrichtung 27 zum Auflegen, Anpressen und Verankern eines Dichtungsmaterials 7 auf das Ausbesserungsmaterial 6 und Herstellung eines Schichtverbundes 8 mit einer relativ glatten Oberfläche auf.

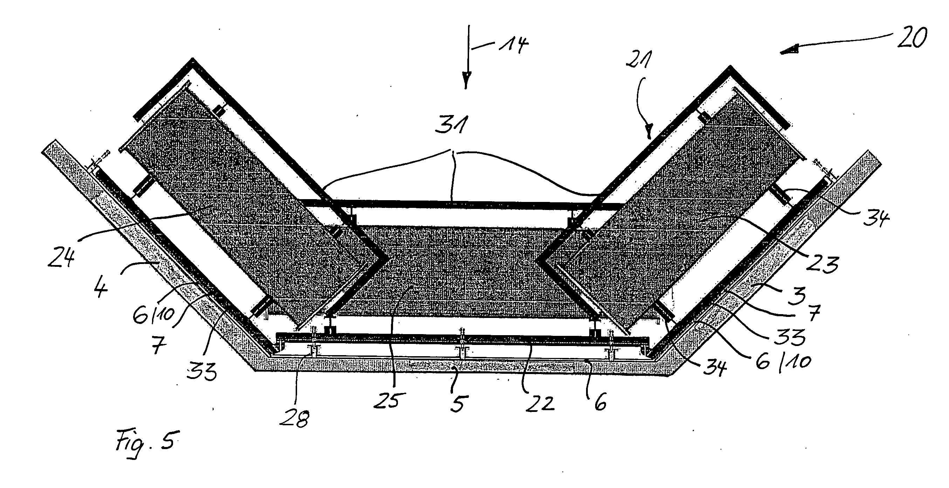

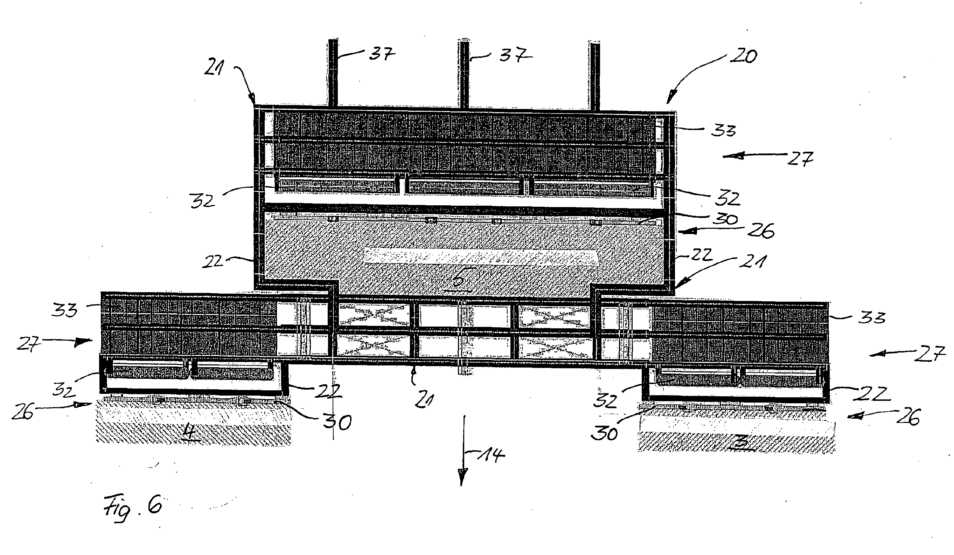

Als Einrichtung 26 sind Spritzdüsen 28 frontseitig angeordnet, welche dem Aufbringen von Spritzbeton als Ausbesserungsmaterial 6 dienen. Den Spritzdüsen 28 nachgeschaltet ist eine Glätt- und Nivelliereinrichtung 30, welche an einem Horizontalträger 22 befestigt sein kann (siehe auch Fig. 5 und 6).

Die Einrichtung 27 zum Auflegen, Einpressen und Verankern eines Dichtmaterials 7 ist der Einrichtung 26 nachgeordnet, wie insbesondere aus Fig. 2 hervorgeht. Die Einrichtung 27 im Bereich der Kanalsohle 5 der Fig. 2 weist eine Rolle 25 mit dem Dichtmaterial 7 auf, welches eine flexible Betonschutzplatte 10 aus einem Kunststoffmaterial ist. Die Einrichtung 27 umfasst außerdem wenigstens eine Anpressrolle 32, welche die bahnenförmige, flexible Betonschutzplatte 10 der Rolle 25 auf den nivellierten Spritzbeton 6 auflegt und anpresst. Zur Herstellung des Schichtverbundes 8 und einer glatten Oberfläche ist wenigstens eine Schaltafel 33 der Anpressrolle 32 nachgeordnet, welche die Breite der flexiblen Betonschutzplatte 10 bzw. der Sohle 5 aufweist.

Die Schaltafel 33 ist über Stabilisierungsträger 34 an einem Rüttler 29 angeordnet, welcher unterhalb des Horizontalträgers 22 an dem Traggerüst 21 befestigt ist. Zumindest front- und rückseitig sind Laufrollen 36, von denen in Fig. 2 nur eine rückseitige Laufrolle 36 gezeigt ist, an Trägern 37 gehalten.

Fig. 5 und 6 zeigen die gesamte Gleit-Zieh-Schalung 20 zur Sanierung eines nach oben offenen, trapezförmigen Kanals 2 gem. Fig. 1. Gleiche Merkmale sind mit identischen Bezugszeichen versehen.

Die Vorderansicht der Gleit-Zieh-Schalung 20 gemäß Fig. 5 und die Draufsicht gemäß Fig. 6 verdeutlichen, dass, wie in Fig. 1 schematisch gezeigt, die Einrichtungen 26 zum Aufbringen des Frischbetons 6 im Bereich der Wände 3, 4 und die nachgeordneten Einrichtungen 27 zum Auflegen und Anpressen der flexiblen Betonschutzplatten 10 im Bereich der Wände 3, 4 an der Tragkonstruktion 21 in Verfahrrichtung gemäß Pfeil 14 vor den Einrichtungen 26, 27 im Bereich der Sohle 5 angeordnet sind.

Die Wände 3, 4 sind Böschungswände analog zur Fig. 1 und die Einrichtungen 26, 27 im Bereich der Wände 3, 4 sind mit einer korrespondierenden Schrägstellung an der Tragkonstruktion 21 befestigt. Die Tragkonstruktion 21 kann auch im Bereich des Böschungsfußes mit Gelenken (nicht dargestellt) versehen sein, um die jeweils erforderliche Schrägstellung zu realisieren. Die Halterungen 31 für die Rollen 23, 24, 25 sind etwa U-förmig ausgebildet.

Im Bereich der Sohle 5 ist in Fig. 5 als ein Ausbesserungsmaterial 6 Frischbeton aus Spritzdüsen 28 aufgebracht worden. Im Bereich der Wände 3, 4 liegt auf dem Frischbeton 6 bereits die flexible Betonschutzplatte 10 als Dichtmaterial 6 auf, und Schaltafel 33 sorgen für ein Einpressen und Verankern in dem Spritzbeton 6.

Fig. 6 verdeutlicht, dass die Wände 3, 4 vor den Einrichtungen 26 noch nicht mit Frischbeton versehen sind. Die Einrichtungen 27 im Bereich der Wände 3, 4 sind jeweils mit zwei Anpressrollen 32 und einer Schaltafel 33 versehen, während die Einrichtung 27 zum Auflegen des Dichtmaterials im Bereich der breiteren Sohle 5 drei Anpressrollen 32 aufweist. Die Verbindung der Einrichtungen 26, 27 im Bereich der Sohle 5 zu den analogen Einrichtungen 26, 27 im Bereich der Wände 3, 4 erfolgt über beidseitige Horizontalträger 22 der Tragkonstruktion 21. Es ist auch möglich, die Einrichtungen 26, 27 im Bereich der Sohle 5 und der Wände 3, 4 getrennt anzuordnen, was eine getrennte oder gemeinsame Tragkonstruktion und einen gemeinsamen oder getrennte Antriebe für beide Wände 3, 4 einschließt.

## Patentansprüche

1. Verfahren zur Sanierung und Auskleidung von Kanälen, Becken, Gruben und dergleichen im Bereich einer Sohle (5) und/oder Wänden (3, 4), insbesondere von nach oben offenen Betonkanälen, mit Hilfe eines Ausbesserungs-und Dichtmaterials,
**dadurch gekennzeichnet,**
**dass** eine monolithische Sanierung bzw. Auskleidung durchgeführt wird und in einem Arbeitsgang zunächst ein Ausbesserungsmaterial (6) auf die Sohle (5) und/oder Wände (3, 4) aufgebracht wird und danach auf das Ausbesserungsmaterial (6) ein Dichtmaterial (7) aufgebracht und unter Ausbildung eines Schichtverbundes (8) mit dem Ausbesserungsmaterial (6) verbunden wird.

2. Verfahren nach Anspruch 1,
**dadurch gekennzeichnet,**
**dass** als Ausbesserungsmaterial (6) Frischbeton auf die Wände (3, 4) und/oder Sohle (5) aufgebracht und vor dem Auflegen des Dichtmaterials (7) geglättet wird.

3. Verfahren nach Anspruch 1 oder 2,
**dadurch gekennzeichnet,**
**dass** als Dichtmaterial (7) eine flexible Betonschutzplatte (10) verwendet wird und unter Ausbildung einer glatten bis strukturierten Oberfläche mit dem Frischbeton (6) verbunden wird.

4. Verfahren nach Anspruch 3,
**dadurch gekennzeichnet,**
**dass** die flexible Betonschutzplatte (10) von einer Rolle (23, 24, 25) abgerollt und bahnenförmig auf den Frischbeton (6), beispielsweise Spritz- oder Schüttbeton, aufgelegt, angepresst und verankert wird.

5. Verfahren nach Anspruch 3 oder 4,
**dadurch gekennzeichnet,**
**dass** die flexible Betonschutzplatte (10) wenigstens an einer Oberflächenseite mit Ansätzen, beispielsweise Verwirbelungselementen oder Verankerungselementen (11), versehen und mit den Verankerungselementen (11) in dem Frischbeton (6) verankert wird.

6. Verfahren nach einem der Ansprüche 3 bis 5,
**dadurch gekennzeichnet,**
**dass** die flexible Betonschutzplatte (10) für die Wände (3, 4) und die Sohle (5) von jeweils wenigstens einer Rolle (23, 24, 25) abgerollt wird, welche gemeinsam oder getrennt verfahren werden, und dass die Rollen (23, 24) im Bereich der Seitenwände (3, 4) beispielsweise vor oder nach der Rolle (25) im Bereich der Sohle (5) angeordnet und die Rollen (23, 24, 25) gemeinsam verfahren werden.

7. Verfahren nach einem der Ansprüche 3 bis 6,
**dadurch gekennzeichnet,**
**dass** die flexiblen Betonschutzplatten (10) der Wände (3, 4) und der Sohle (5) an ihren aneinandergrenzenden Längsrändern (12) verschweißt werden können.

8. Verfahren nach einem der Ansprüche 3 bis 7,
**dadurch gekennzeichnet,**
**dass** als flexible Betonschutzplatte (10) ein bahnförmiges Kunststoffmaterial, insbesondere aus einem thermoplastischen Kunststoff, verwendet wird, welche eine geringe Stärke, z.B. etwa 3 mm, eine vorgebbare Reibung und eine relativ hohe Auszugsfestigkeit, insbesondere im Bereich von 30 bis 50 t/m², aufweist.

9. Verfahren nach einem der Ansprüche 2 bis 8,
**dadurch gekennzeichnet,**
**dass** die Wände (3, 4) und die Sohle (5) vor dem Aufbringen des Spritzbetons (9) vorbereitet, insbesondere Schäden ausgebessert und einer Hochdruckvorreinigung unterzogen werden.

10. Vorrichtung zur Sanierung und Auskleidung von Kanälen, Becken, Gruben und dergleichen im Bereich einer Sohle (5) und/oder Wänden (3, 4), insbesondere von nach oben offenen Betonkanälen, mit einem Ausbesserungs- und Dichtmaterial, insbesondere zur Durchführung des Verfahrens nach einem der Ansprüche 1 bis 9,
**dadurch gekennzeichnet,**
**dass** eine Gleit-Zieh-Schalung (20) vorgesehen ist, welche im Bereich der Sohle (5) und/oder Wände (3, 4) jeweils eine Einrichtung (26) zum wenigstens streckenweisen, kontinuierlichen und gleichzeitigen Aufbringen eines Ausbesserungsmaterials (6) und jeweils eine Einrichtung (27) zum Aufbringen eines Dichtmaterials (7) auf das Ausbesserungsmaterial (6) auf der Sohle (5) und/oder den Wänden (3, 4) und zur Ausbildung eines Schichtverbundes (8) und einer vorgebbaren Oberfläche aufweist.

11. Vorrichtung nach Anspruch 10,
**dadurch gekennzeichnet,**
**dass** die Gleit-Zieh-Schalung (20) wenigstens eine Tragkonstruktion (21) aufweist, an welcher die Einrichtungen (26, 27) angeordnet sind, und jeweils frontseitig eine Einrichtung (26) zum Aufbringen von Frischbeton als Ausbesserungsmaterial (6),beispielsweise wenigstens eine Spritzdüse (28) zum Aufbringen von Spritzbeton, angeordnet ist.

12. Vorrichtung nach Anspruch 10 oder 11,
**dadurch gekennzeichnet,**
**dass** an der Tragkonstruktion (21) und den Spritzdüsen (28) im Bereich der Wände (3, 4) und Sohle (5) nachgeschaltet jeweils mindestens ein Rüttler (29) und eine Gleit- und Nivelliereinrichtung (30), zum Beispiel ein Abziehschild oder ein Abziehbalken, angeordnet sind.

13. Vorrichtung nach einem der Ansprüche 10 bis 12,
**dadurch gekennzeichnet,**
**dass** die den Wänden (3, 4) und der Sohle (5) jeweils zugeordnete Einrichtung (27) zum Auflegen einer flexiblen Betonschutzplatte (10) als Dichtmaterial (7) an jeweils einer Halterung (31) der Tragkonstruktion (21) der Gleit-Zieh-Schalung (20) angeordnet ist und die Halterung (31) jeweils die flexible Betonschutzplatte (10) aufnimmt, welche als Rolle (23, 24, 25) angeordnet und jeweils auf den Frischbeton (6) der Wände (3, 4) und der Sohle (5) abrollbar in der Halterung (31) gehalten ist.

14. Vorrichtung nach Anspruch 13,
**dadurch gekennzeichnet,**
**dass** die Einrichtung (27) zum Auflegen der flexiblen Betonschutzplatte (10) im Bereich jeder Rolle (23, 24, 25) wenigstens eine Anpressrolle (32) aufweist, welche zur Zuführung der von der jeweiligen Rolle (23, 24, 25) abrollenden flexiblen Betonschutzplatte (10) und zum Ein- oder Aufpressen sowie Verankern der flexiblen Betonschutzplatte (10) in den Frischbeton (6) angeordnet ist.

15. Vorrichtung nach Anspruch 13 oder 14,
**dadurch gekennzeichnet,**
**dass** zum Einpressen und Verankern der flexiblen Betonschutzplatte (10) in den Frischbeton (6) der Wände (3, 4) und der Sohle (5) jeweils wenigstens eine Schaltafel (33) vorgesehen ist, dass die Schaltafel (33) der jeweils zugeordneten Anpressrolle (32) nachgeschaltet an der Tragkonstruktion (21) befestigt ist und auf dem Schichtverbund (8) aus flexibler Betonschutzplatte (10) und Frischbeton (6) aufliegt.

16. Vorrichtung nach Anspruch 15,
**dadurch gekennzeichnet,**
**dass** die Schalttafeln (33) über Stabilisierungsträger (34) an der Tragkonstruktion (21) befestigt sind.

17. Vorrichtung nach einem der Ansprüche 10 bis 16,
**dadurch gekennzeichnet,**
**dass** die Einrichtungen (26, 27) zum Herstellen eines Schichtverbundes (8) auf den Wänden (3, 4) parallel zueinander und, in Verfahrrichtung gesehen, in gleicher Höhe und die Einrichtungen (26, 27) zum gleichzeitigen Herstellen eines Schichtverbundes (8) auf der Sohle (5), in Verfahrrichtung gesehen, vor oder hinter den den Wänden (3, 4) zugeordneten Einrichtungen (26, 27) an der Tragkonstruktion (21) der Gleit-Zieh-Schalung (20) angeordnet sind.

18. Vorrichtung nach einem der Ansprüche 10 bis 17,
**dadurch gekennzeichnet,**
**dass** an der Tragkonstruktion (21) der Gleit-Zieh-Schalung (20) wenigstens zwei Einrichtungen (35) zum Verbinden, beispielsweise Verschweißen, der aneinander grenzenden Bahnen der Betonschutzplatten (10) angeordnet sind.

19. Vorrichtung nach einem der Ansprüche 10 bis 18,
**dadurch gekennzeichnet,**
**dass** die Einrichtungen (26, 27), welche zum Herstellen eines Schichtverbundes (8) im Bereich der Wände (3, 4) vorgesehen sind, mit einer der Neigung der Wände (3, 4) entsprechenden Schrägstellung an der Tragkonstruktion (21) der Gleit-Zieh-Schalung (20) befestigt sind.

20. Vorrichtung nach einem der Ansprüche 10 bis 18,
**dadurch gekennzeichnet,**
**dass** zum Herstellen eines Schichtverbundes (8) im Bereich der Sohle (5) und/oder Wände (3, 4) eine gemeinsame Tragkonstruktion (21) oder getrennte Tragkonstruktionen (21) mit den entsprechenden Antrieben vorgesehen sind.

21. Vorrichtung nach Anspruch 20,
**dadurch gekennzeichnet,**
**dass** die Tragkonstruktion (21) gelenkig ausgebildet ist, beispielsweise Gelenke aufweist, und an unterschiedlich geneigte Wände (3, 4) und/oder Decken anpassbar ist.

22. Dichtungsmaterial zur Sanierung und Auskleidung von Kanälen, Becken, Gruben und dergleichen, welches auf ein Ausbesserungsmaterial (6), beispielsweise Frischbeton, auflegbar und mit diesem verbindbar ist,
**dadurch gekennzeichnet,**
**dass** eine flexible Betonschutzplatte (10) verwendet wird, welche aus einem thermoplastischen Kunststoffmaterial besteht, auf Rollen auf- und abrollbar und in Bahnen verlegbar ist und Ansätze, beispielsweise Verankerungselemente (11) zum Verankern in dem Frischbeton (6) und/oder Verwirbelungselemente, aufweisen kann.
